# EUROPEAN PATENT SPECIFICATION

(11) **EP 3 679 345 B1**
(45) Date of publication and mention of the grant of the patent: **11.12.2024**
(21) Application number: 18766179.8
(22) Date of filing: 04.09.2018
(51) Int. Cl.: G01N 21/07, G01N 35/00

(54) **DETECTION SYSTEM**
DETEKTIONSSYSTEM
SYSTÈME DE DÉTECTION

(30) Priority: 04.09.2017 PT 2017110275; 19.09.2017 EP 17191771
(43) Date of publication of application: 15.07.2020
(73) Proprietor: Biosurfit, S.A., Azambuja 2050-317 (PT)
(72) Inventor: MIGUEL PINTO BORDEIRA, Sandro, 2870-047 Montijo (PT); MIGUEL MELO RIBEIRO, Mauro, 2680-603 Apelação (PT); TAVARES ALELUIA, Miguel, 2700-679 Amadora (PT); MIGUEL AFONSO GOMES DA FONSECA, Rui, 2820-105 CHARNECA DA CAPARICA (PT); FILIPE PINTO SILVA, Tiago, 1200-100 LISBOA (PT); JOSÉ SANTOS FERNANDES, Milton, 1400-408 LISBOA (PT); DA CONCEIÇÃO FERNANDES THOMAZ, Filipe, 1000-154 LISBOA (PT); MANUEL DE OLIVEIRA GARCIA DA FONSECA, João, 2050-360 AZAMBUJA (PT)
(74) Representative: Venner, Julia Ann
(86) International application number: PCT/EP2018/073735
(87) International publication number: WO 2019/043250

(56) References cited:
- EP-A2- 0 941 767
- EP-A2- 2 324 924
- WO-A1-2013/084140
- WO-A1-2016/088992
- US-A- 5 122 284
- US-A1- 2013 112 296
- US-A1- 2015 268 095

## Description

### FIELD

The disclosure relates to a light detection system. In particular, but not exclusively, the disclosure relates to a detection system for measuring light absorption of a liquid sample in a rotating assay device.

### BACKGROUND

Modern assays are often provided in the form of a microfluidic device (or cartridge) for use with a reader. The device allows a sample to be introduced and may carry other liquids in storage arrangements such as blister packs so that they can also be introduced into the device, for example by pressing on the blister pack. The device is then inserted into a reader for processing the sample and obtaining a read out of the assay. The reader is arranged to rotate to drive liquid flow for processing in assay devices.

Optical detection systems are often used to read out assay devices, for example by measuring light absorption of the liquid being tested. Some detection systems for measuring light absorption of a liquid sample use Paired Emitter-Detector Diodes (PEDD) which generally used a light emitting diode (LED) for a light source and a separate LED for a light receiver. The light source directs light to a light-transmitting chamber in the assay device holding the liquid sample. The light receiver is arranged to receive light from the light source that has passed through the chamber. The change in light intensity between the emitted light and the received light can be used to determine the light absorption of the liquid sample. Often this is determined relative to a blank or a control sample.

In assays using cuvettes to hold the liquid, light may be transmitted from a light source to a light receiver on the other side of the cuvette. Accurate alignment of the light source and light receiver contributes to acceptable signal-to-noise ratios in such tests. In assays using a rotating assay device, for example, a lab on a disc device, light from a light source may be directed by reflection through a chamber holding the liquid being tested. Light exiting the chamber may be reflected again towards the light receiver. The reflectors may be integral to the rotating assay device, for example the assay device may comprise voids to induce total internal reflection of incident light. Accurate alignment of the light source, the light receiver and the reflective surfaces to control the signal-to-noise ratio is challenging due to the number of optical components in the assay reader and the movement of the reflectors within the assay device. Instead, readings can be adjusted based on a calibration of the assay reader. However, calibrating each assay reader to a reference assay reader is a resource-intensive process.

EP 0 941 767 describes a centrifuge device that is used to centrifuge a fluid sample, such as a blood sample, to separate the fluid sample into its various component layers, and which is capable of measuring the length of the component layers to calculate cell counts for each layer. The centrifuge device includes a rotor assembly for rotating and thus centrifuging the fluid sample, and a movable optical reader device for reading the cell layers in the centrifuged sample. The centrifuge device is capable of accurately controlling the reading of the centrifuged sample based on the orientation of the rotor, so that the rotor can continue to rotate the centrifuged sample while the readings are being taken.

### SUMMARY

Aspects of the presently claimed invention are set out in the independent claims. Particular embodiments of these aspects are set out in the dependent claims. Any subject matter contained herein that does not fall within the scope of the appended claims is considered as being useful for understanding the invention.

Also disclosed is a detection device. The detection device comprises a space for receiving an assay device having one or more chambers for containing a liquid sample and a drive arrangement engaging the assay device to rotate the assay device. The detection system comprises one or more light sources each arranged to direct light towards the assay device. The detection system comprises a diffuser arranged in a light path of each of the one or more light sources. Each diffuser is arranged to diffuse light from its respective light source and is arranged between its light source and the space. The detection system also comprises a light receiver corresponding to each of the one or more light sources. Each light receiver is arranged to receive light from its respective light source that has passed through the assay device.

The diffuser(s) act to increase the angular range of light that reaches the assay device. By increasing the angular range, the consistency of the angular profile of the light reaching the light receiver is increased in the face of manufacturing tolerances of the assay device and fluctuations in alignment as the assay device is inserted and rotated in the reader. Thus, a more consistent signal to noise ratio can be achieved across readers, assay devices and individual runs of assays. Specifically, due to positional and tilt tolerances inherent to manufacturing components for the light source and the light receiver, and in particular the assay device, as well as variability due to how the device is secured and rotated in the reader, without a diffuser, different detection devices would have a larger variation in the respective signal-to-noise ratios. This is because the emitted light has a narrower light intensity profile with less uniformity over the range of emitted angles that are received due to the mentioned variations. This enables manufacture of readers to lower tolerances, facilitates the use of rotation arrangements for the device that are less precise and, in particular, allows for higher manufacturing tolerances in respect of the assay devices themselves. Given the increased consistency and tolerance of variations as outlined, calibration of the detection device against a reference is less critical and may not be required.

The assay device may comprise a first surface arranged to reflect light from the light source to the chamber, and a second surface arranged to reflect light from the chamber to the light receiver. When using reflectors, the diffuser(s) act to increase the angular range over which light is travelling to the reflector so that the likelihood of light reaching the detector at an angle that is transmitted through the chamber and on to the respective light receiver is increased. Thus, the benefit of using diffusers is further reinforced when used in combination with reflectors in the assay device.

In particular, the assay device may be a disc similar in dimension to a compact disc (e.g. CD, DVD or Blu-Ray) with thickness of around 1.2 millimetres and where each chamber has a dimension in the order of hundreds of microns. Other assay devices that may be used with the detection device may have similar scale dimensions with chambers having a dimension in the order of hundreds of microns. The assay device may have a plane perpendicular to an axis of rotation, and the first surface may be arranged to reflect light into the plane of the disc. It is generally impractical to manufacture completely flat and precisely inclined surfaces to reflect light, in particular, at this scale where the reflective surfaces may have a dimension of 200 microns +/- 5% in a direction parallel to the axis of rotation, deviations to planarity on the micron scale, and the angle of the reflective surfaces may also vary between 44.8 and 45.2 degrees relative to a direction parallel to the axis of rotation.

Furthermore, the one or more chambers of the assay device may comprise walls through which light enters and exits the respective chamber that are not completely aligned with a direction parallel to the axis of rotation, e.g. due to injection moulding constraints, so that the assay device can be removed from it mould during manufacturing. For example, the walls may have an angle up to 2 degrees relative to a direction parallel to the axis of rotation. These manufacturing tolerances of the assay device in combination with the detection device tolerances discussed above (i.e. the positional and tilt tolerances of the light source and the light receiver) lead to a complex optical system which would require extensive and resource-consuming calibration procedures to make the detection systems substantially equivalent. This exemplifies the benefit of the use of the diffuser(s) to increase the angular range of light that reaches the assay device.

The detection system may comprise a second diffuser corresponding to each of the one or more light sources. Each second diffuser is arranged between its respective light receiver and the space for receiving the assay device.

Advantageously, the second diffusers may be used to further reduce the impact of any manufacturing tolerances of the light receiver to the signal-to-noise ratio. Specifically, the second diffusers further reduce non-uniformities in the angular light intensity profile induced by other elements of the optical system (e.g. reflectors, the walls of the chamber(s), any surfaces arranged to reflect light from the light source to the chamber Thus, the second diffusers may further enhance robustness and reduce variability.

One aspect of the presently claimed invention relates to a detection system. The detection system comprises the detection device described above and the assay device having one or more chambers for containing a liquid sample.

The detection system comprises an assay device having one or more chambers for containing a liquid sample. The detection system comprises a drive arrangement engaging the assay device to rotate the assay device. The detection system comprises one or more light sources each arranged to emit light towards a corresponding one of the one or more chambers. The detection system comprises a diffuser corresponding to each of the one or more light sources. Each diffuser is arranged in a light path between the light source and its respective chamber. The detection system comprises a light receiver corresponding to each of the one or more light sources arranged to receive light from its respective chamber. The assay device comprises a first surface arranged to reflect light from the light source to the chamber, and a second surface arranged to reflect light from the chamber to the light receiver.

Light from each chamber to its respective light receiver forms a second light path, and the detection apparatus may comprise a second diffuser corresponding to each of the one or more light sources, each second diffuser arranged in its respective second light path.

The detection device or the detection system may comprise an aperture corresponding to each of the one or more light sources. Each aperture is arranged between the light source and the diffuser corresponding to its respective light source. By passing the emitted light through an aperture, stray light can be controlled to reduce the amount of light emitted in the detection system in undesired directions. This stray light received by the light receiver has not passed through the assay device.

Each diffuser (e.g. the first or second diffusers) of the detection device or detection system may be closer to the light source than to the space. In other words, each diffuser may be further away from the space for the assay device than to the light source. By arranging the diffusers closer to the light source than to the space, the range of angles of light that reach the assay device can be increased.

Each light source and each light receiver of the detection device or detection system may be supported by a frame having a light-absorbing surface, for example a matt black surface. This reduces the amount of light reflected within the detection system, reducing stray light received by the light receiver that has not passed through the assay device.

Each light source and its corresponding light receiver of the detection device or detection system may be arranged on the same side of the (space for receiving the) assay device. This arrangement allows the detection system to be more compact compared to having each light source and its corresponding light receiver on opposite sides of the space for receiving the assay device.

The diffusion angle of each diffuser of the detection device or detection system may be between 5 degrees and 10 degrees, for example 7.5 degrees. Higher diffusion angles, e.g. above 10 degrees, reduce the light intensity leading to less light being received at the light receiver. Lower diffusion angles, e.g. below 5 degrees, do not sufficiently diffuse light to make the light intensity profile uniform across detection devices.

The detection system or detection device may comprise an electric motor coupled to the assay device to rotate the assay device.

Further aspects of the presently claimed invention relate to a method of detecting light. The method comprises rotating an assay device comprising a chamber for containing a liquid sample and emitting light towards the assay device. Then the emitted light is diffused before it reaches the chamber. Light from the light source that has passed through the rotating assay device is then received. The assay device comprises a first surface arranged to reflect light from the light source to the chamber, and a second surface arranged to reflect light from the chamber to the light receiver.

The method may comprise diffusing the light that has passed through the chamber before receiving the light.

Emitting light towards the assay device may comprise emitting light to a first side of the assay device, and receiving light comprises receiving light from the first side of the assay device.

Also disclosed is an assay device arranged for rotation to drive liquid flow into a chamber. The assay device comprises a first surface arranged to reflect light from a light source to the chamber, and a second surface arranged to reflect light from the chamber to a light receiver. A light path is formed from where light enters the
assay device to the chamber via the first surface. The assay device comprises a diffuser in the light path.

The assay device may comprise a third surface arranged to reflect light from the light source to a fourth surface, and the fourth surface is arranged to reflect light to the light receiver, i.e. light is transmitted through the body of the assay device. This enables a reference or quality control measurement to be acquired for the light source and light receiver pair.

The diffuser of any assay described above may be an external surface of the assay device configured to diffuse light.

At least one of the one or more chambers of any assay device described above may comprise a surface configured to diffuse light. For example, a surface in a plane perpendicular to the axis of rotation of the assay device and closest to the light receiver may comprise frosting or surface roughness. This reduces the amount of stray light reaching the light receiver and improves the signal-to-noise ratio.

### BRIEF DESCRIPTION OF THE FIGURES

Specific embodiments are now described by way of example with reference to the drawings, in which:
Figure 1 illustrates a detection system;
Figure 2 illustrates a different embodiment of the detection system;
Figure 3 illustrates yet a different embodiment of the detection system;
Figure 4 illustrates yet a different embodiment of the detection system; and
Figure 5 illustrates a method of detecting light.

### DETAILED DESCRIPTION

A detection system for determining light absorption by a liquid sample held in a chamber in a rotating assay device comprises a diffuser arranged to diffuse light emitted from a light source before the light reaches the chamber in the rotating assay device. The diffuser enables the angular light intensity profile of the emitted light to be more uniform over the range of angles that may be transmitted through and received from the chamber due to the tolerances described above and discussed in details below than without the diffuser.

This may help to reduce variations in the signal-to-noise ratio due to these tolerances. These variations could cause variability in detection results between different detection systems, assay devices and assay runs. Accordingly, providing for the diffusion of the light as described may help to make assays more reproducible and may reduce the need for extensive calibration.

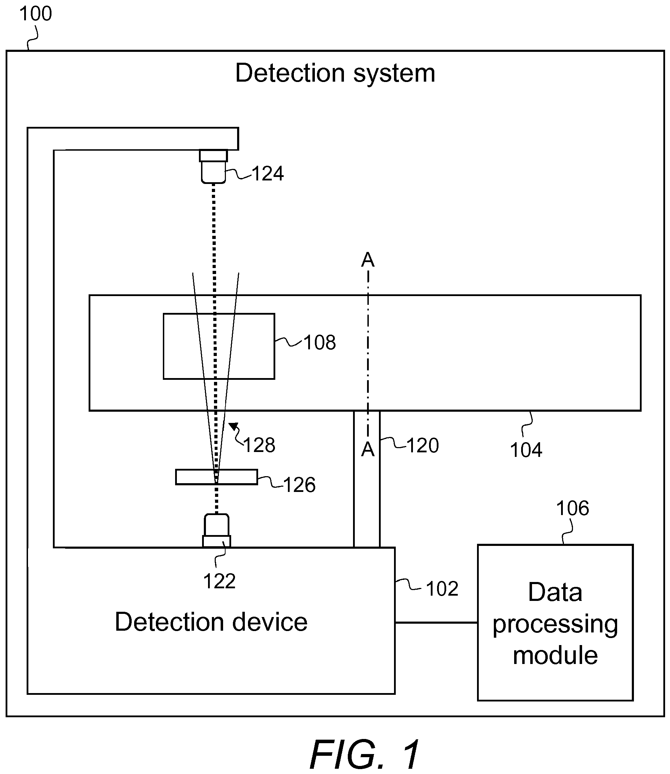

With reference to Figure 1, a detection system 100 comprises a detection device 102, an assay device 104 and a data processing module 106. The data processing module 106 is operatively connected to the detection device 102.

The detection device 102 is arranged to engage the assay device 104 for rotation using a spindle, as described below. The assay device 104 is removable from the detection system 100, and the detection system 100 comprises an opening through which the assay device 104 can be inserted into, and removed from, the detection system 100. For example, the detection system 100 may comprise a tray which is arranged to move into and out of the detection system, and onto which the assay device is placed, akin to a tray used to load a CD into a CD player. When an assay device has not been inserted into the detection system, the detection system comprises a space for receiving an assay device.

The assay device is disc-shaped and may be, for example, a lab-on-a-disc. The assay device, disc-shaped or otherwise, may comprise a central hole which is configured to engage with a spindle as discussed below, the spindle being coupled to a motor for driving rotation of the spindle, which in turn drives rotation of the engaged device. The assay device 104 comprises a chamber 108 for containing a liquid to be tested. The chamber 108 may be connected to an opening for receiving the liquid in the assay device via further chambers and/or conduits (not illustrated). The assay device 104 is arranged for rotation about an axis of rotation A-A to drive liquid flows in the assay device. For example, the assay device may be a microfluidic device in which the flow of liquid is driven by the rotation of the assay device.

The detection system 100 is configured to rotate the assay device 104 according to a temporal profile of rotation speed to drive liquid flows in the device in accordance with the specific assay protocol implemented in the assay device. Occurrence of a reaction between the reagent and the analyte in the assay device alters the light received from the chamber, so that the light receiver signal can be used infer the presence or a characteristic (such as concentration) of the analyte in a liquid sample in the assay device. Whilst one chamber is described with reference to Figure 1, it will be understood that an assay device may comprise a plurality of chambers for detection of the presence or a characteristic the analyte. Each chamber may be arranged to use the same light source and light receiver pair, or the detection device may comprise a light source and light receiver pair for each such detection chamber.

For the avoidance of doubt, the term "microfluidic" is referred to herein to mean devices having a fluidic element such as a reservoir or a channel with at least one dimension below 1mm. The assay device may be configured to handle volumes of liquid on the scale of nanolitres to microliters or up to 100 microliters. Some but not necessarily all the structures on such an assay device may be microfluidic.

The detection device 102 comprises a spindle 120, a light source 122, a light receiver 124 and a diffuser 126. The detection device 102 supports the light source 122, the light receiver 124 and the diffuser 126 using a support structure, such as a frame.

The spindle 120 is configured to engage the assay device 104 to rotate the assay device about the axis of rotation A-A. A motor (not illustrated) is coupled to the spindle 120 to rotate the spindle. The light source 122 is arranged to emit light with a wavelength, for example, in the visible range such as orange or green, ultraviolet or infra-red light. The light receiver 124 is arranged to detect light in the range corresponding to the light emitted from the light source 122. In some embodiments, the light receiver 124 is arranged to detect light that is emitted as a result of fluorescence following absorption of light from the light source.

The light source 122 is arranged to emit light towards the assay device 104, such that as the assay device 104 is rotated, light passes through the chamber 108 when the chamber is in a predetermined configuration relative to the light source 122 and the light receiver 124. In other words, the light source is arranged opposite the light receiver, and light passes through the chamber 108 when the chamber is aligned with the light source 122 and the light receiver 124. The light receiver 124 is arranged to receive light from the light source 122 that has passed through the assay device 104 when the light source and the light receiver are in a predetermined configuration relative to the chamber of the assay device.

The diffuser 126 is arranged to diffuse light emitted from the light source 122, thereby diffusing 128 the emitted light before the light reaches the chamber 108. The diffuser 126 may be arranged closer to the light source 122 than the assay device 104 to increase the amount of light from the light source 122 that is diffused by the diffuser 126 (compared to if the diffuser was arranged closer to the assay device than the light source). The diffusion angle of the diffuser may be between 5 degrees and 10 degrees, for example 7.5 degrees.

According to the current invention, the detection device comprises a plurality of paired light sources and light receivers each for interacting with a corresponding chamber.

The data processing module 106 is arranged to control the detection device and may be arranged to receive data from the from the detection device to determine an effect of liquid in the chamber on emitted light. For example, the determined effect may be amount of light absorption, light scattering, light reflection or changes in the refractive index of the liquid. The data processing module receives a signal indicative of the received light from the detection device, such as a voltage signal from the light receiver. The received signals are then processed by the data processing module to carry out the assays, for example the concentration of an analyte based on light absorption, or perform quality control or calibration.

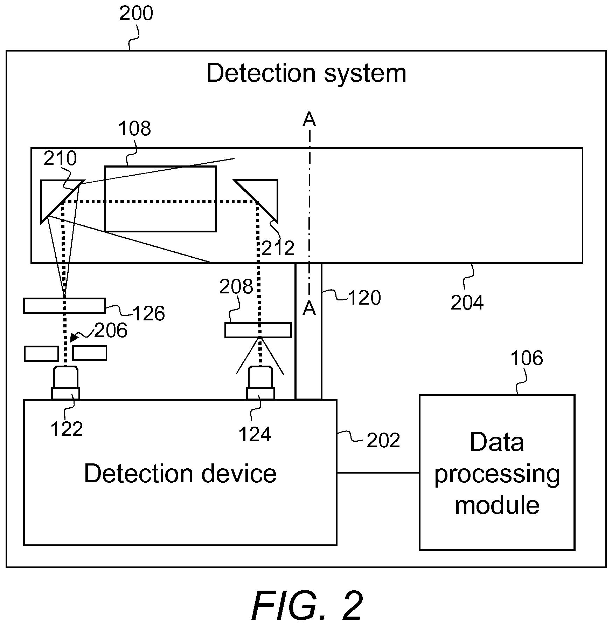

Figures 2 to 4 illustrate embodiments of the detection system according to the current invention.

With reference to Figure 2, a detection system 200 comprises a detection device 202, an assay device 204 and a data processing module 106. The detection system 200 is substantially the same as the detection system 100. The data processing module 106 is substantially the same as the data processing module of the detection system 100, and is operatively connected to the detection device 202.

The detection device 202 is substantially the same as detection device 102, except that the detection device comprises an aperture 206 and a second diffuser 208, and that the light source 122 and light receiver 124 are arranged on the same side of the assay device 204. The detection device 202 supports the light source 122, the light receiver 124, the diffusers 126, 208 and the aperture 206 using a support structure, such as a frame. The aperture 206 is arranged between the light source 122 and the diffuser 126 to reduce divergence of light from the light source 122. The second diffuser 208 is arranged to diffuse light that has passed through the assay device 204 before it reaches the light receiver 124. The diffusion angle of the second diffuser may be between 5 degrees and 10 degrees, for example 7.5 degrees.

The assay device 204 comprises a chamber 108, a first reflector 210 and a second reflector 212. The chamber 108 is for containing a liquid to be tested, as before. The assay device comprises a plane perpendicular to the axis of rotation A-A. The chamber 108 may have a dimension up to 10 millimeters in the plane. The first reflector 210 is arranged to reflect light from the light source 122 substantially into the direction of the plane towards the chamber 108. The second reflector 212 is arranged to reflect light that has passed through the chamber 108 substantially in a direction parallel to the axis of rotation A-A towards the light receiver 124. The first and second reflectors 210, 212 are arranged such that light enters and leaves the assay device 204 on the same side of the assay device.

The first and second reflectors 210, 212 are configured to reflect light using total internal reflection. For example, the assay device 204 may have a plastic body in which the chamber 108 is provided, and the reflectors may provide a substantially 45 degree (relative to the incident light) boundary with air such that the difference in refractive index between the air and the plastic causes the incident light to be reflected. In other embodiments, the first and second reflectors 210, 212 may be mirrors or mirrored surfaces.

For assay devices that are thin (in the direction of A-A relative to a dimension of the device in the plane), reflecting light through the chamber in the plane of the assay device enables light to travel through more of the liquid being tested compared to if the light was passed though the chamber in the direction of the axis A-A. In turn, this enables more light to be absorbed by the liquid being tested, leading to more refined and nuanced effects on the emitted light to be determined.

In some embodiments, the assay device comprises a third reflector arranged to reflect light from the light source to a fourth reflector, and the fourth reflector is arranged to reflect light to the light receiver. The light between the third and fourth reflectors may pass through an empty chamber or without passing through a chamber, i.e. light is transmitted through the body of the assay device. Both of these arrangements can be used to provide a reference signal for the paired light source and light receiver.

The light source 122 is arranged to emit light towards the assay device 204, such that as the assay device 204 is rotated, light passes through the chamber 108 when the chamber is in a predetermined configuration relative to the light source 122, the first reflector 210, the second reflector 212 and the light receiver 124. In other words, light emitted from the light source 122 is reflected towards the chamber 108, and light that has passed through the chamber 108 is reflected towards the light receiver 124.

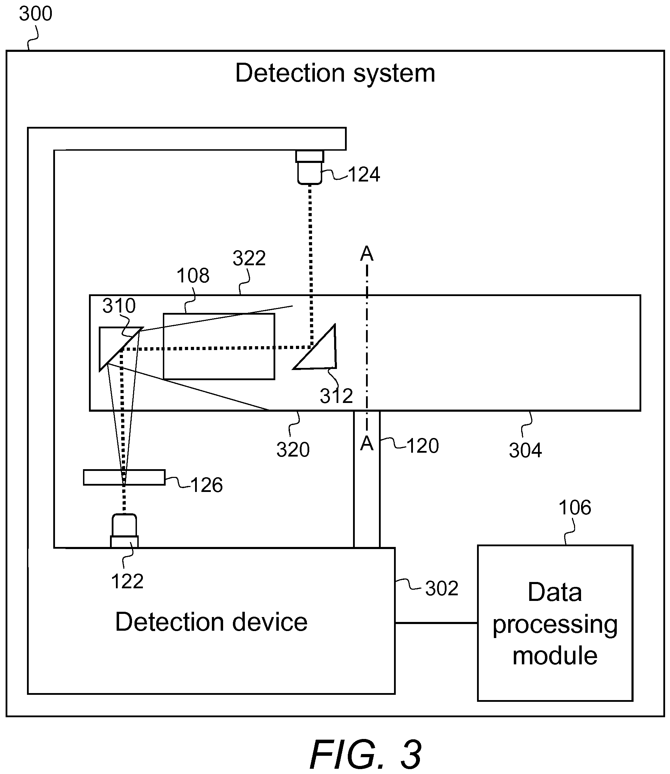

With reference to Figure 3, a detection system 300 comprises a detection device 302, an assay device 304 and a data processing module 106. The detection system 300 is substantially the same as the detection system 100. The data processing module 106 is substantially the same as the data processing module of the detection system 100, and is operatively connected to the detection device 302.

The detection device 302 is substantially the same as the detection device 102 except that the light source 122 and the light receiver 124 are arranged on opposite sides of the assay device 304.

The assay device 304 is substantially the same as the assay device 204, comprising a chamber 108, a first reflector 310 and a second reflector 312. The chamber 108 is for containing a liquid to be tested. The assay device comprises a plane perpendicular to the axis of rotation A-A. The first reflector 310 is arranged to reflect light from the light source 122 substantially into the direction of the plane towards the chamber 108. The second reflector 312 is arranged to reflect light that has passed through the chamber 108 substantially in a direction parallel to the axis of rotation A-A towards the light receiver 124. The first and second reflectors 310, 312 are arranged such that light enters the assay device on a first side 320, and light leaves the assay device on a second side 322.

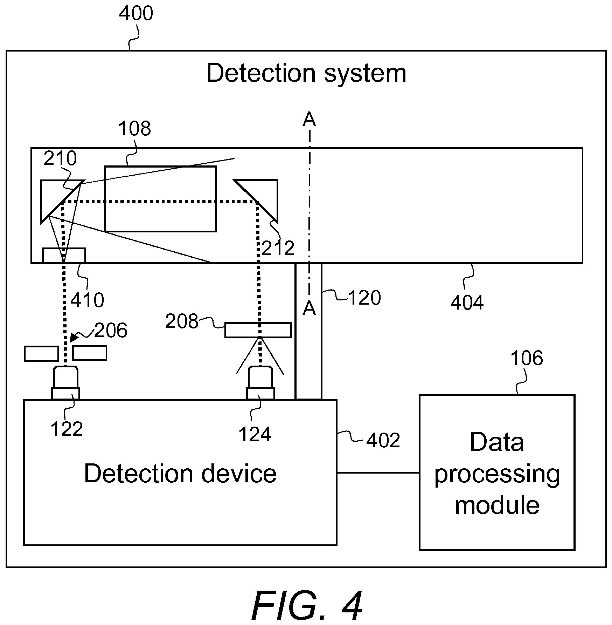

With reference to Figure 4, a detection system 400 comprises a detection device 402, an assay device 404 and a data processing module 106. The detection system 400 is substantially the same as the detection system 200. The data processing module 106 is substantially the same as the data processing module of the detection system 100, and is operatively connected to the detection device 402.

The detection device 402 is substantially the same as the detection device 202 except that the detection device 402 does not comprise a diffuser between the light source 122 and the assay device 404. In this embodiment, the diffuser is instead moved to the assay device 404, as described below.

The assay device 404 is substantially the same as the assay device 204. The assay device 404 comprises a diffuser 410 on an external surface of the assay device. The diffuser 410 is arranged in a light path that is formed when the light source emits light that reaches the first reflector, and the diffuser 410 is arranged to diffuse light entering the assay device before it reaches the first reflector 210. Advantageously, the diffuser 410 acts to increase the angular range of light that reaches the first reflector without requiring the detection device to comprise a diffuser, although the range of angles of light may be greater when using a diffuser in the detection device.

In other embodiments, the diffuser in the assay device is arranged to diffuse light from the first reflector 210 before it reaches the chamber 108.

Is some embodiments, the support structure supporting the light source 122 and the light receiver 124 (as well as any apertures or diffusers if present) comprises a light-absorbing surface, such as a matt black surface. This reduces stray light inside the detection device from reaching the light receiver.

In some embodiments, the chamber 108 of the assay device 104, 204, 304, 404 comprises at least one surface configured to diffuse light to further diffuse light through the chamber. For example, the surface of the chamber in the plane of the assay device and closest to the light receiver may comprise frosting or surface roughness. This reduces the amount of stray light reaching the light receiver by reducing the amount of light that can exit the chamber through that surface, and thus improves the signal-to-noise ratio of the system.

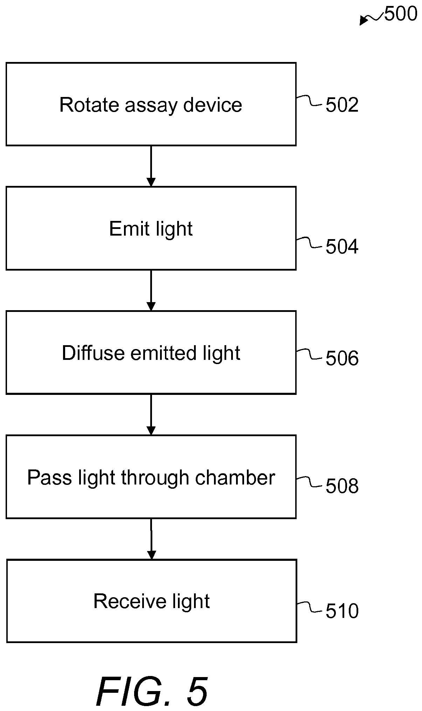

With reference to Figure 5, a process 500 for detecting light is described. At step 502, the detection device 102, 202, 302, 402 rotates the assay device 104, 204, 304, 404 using the motor coupled to the spindle 120. The speed of rotation is greater than 0 Hertz and may be, for example, at least 0.1, 0.2, 0.3, 0.5, 1, 10 or 100 Hertz. At step 504, the light source 122 of the detection device emits light towards the rotating assay device.

At step 506, light from the light source is diffused before it reaches the chamber 108 using the diffuser 126, 410. At step 508, the diffused light passes through the chamber 108. For example, in the detection system 200, the diffused light is reflected through the chamber. At step 510, light that has passed through the chamber is received at the light receiver 124. In particular, steps 504 to 510 are carried out while the assay device is being rotated.

The above description has been made in terms of specific embodiments for the purpose of illustration and not limitation. Many modifications and combinations of, and alternatives to, the features described above will be apparent to a person skilled in the art .

For example, a detection system may comprise any combination of diffusers, reflectors, and/or apertures described with reference to Figures 2 to 4. Specifically, in embodiments of the detection system comprising a first diffuser in a light path between the light source and the chamber, the detection system may comprise an aperture and/or a second diffuser, or no aperture nor second diffuser in a light path between the chamber and the light receiver. In embodiments of the detection system comprising a first diffuser and a first aperture in a light path between the light source and the chamber, the detection system may comprise a second aperture and/or a second diffuser, or no second aperture nor second diffuser in a light path between the chamber and the light receiver. In embodiments comprising both a second diffuser and a second aperture in a light path between the chamber and the light receiver, the second aperture is arranged between the second diffuser and the light receiver. Another example is that the assay device of some embodiments may comprise frosted walls to diffuse light.

For example, while chambers have been described above with reference to drawings depicting chambers of a certain form factor, it will be appreciated that the disclosure is not so limited and that the described chambers may take any suitable shape or configuration, for example have varying depth, be significantly elongate to resemble a channel, for example a serpentine or meandering channel, be formed by a network of channels or cavities, contain pillars, comprise interconnected volumes, etc.

Embodiments have been described with reference to microfluidic devices, specifically centrifugal microfluidic devices used in assays, but it will be apparent that the concept of measuring light absorption described herein is not limited to any particular device or application. It will be appreciated that the disclosure extends to all such embodiments and is also not limited to any specific way of manufacturing the devices or any specific form factor. Likewise, the disclosure is not limited to any specific assays but extends to all assays that can benefit from an arrangement that reduces signal-to-noise ratio in light absorption measurements.

## Claims

1. A detection system (100) comprising:
an assay device (104) having one or more chambers (108) for containing a liquid sample;
a drive arrangement (120) engaging the assay device to rotate the assay device;
one or more light sources (122) each arranged to emit light towards a corresponding one of the one or more chambers, wherein the emitted light forms a light path between the light source and its respective chamber;
a diffuser (126) corresponding to each of the one or more light sources, each diffuser arranged in a respective light path; and
a light receiver (124) corresponding to each of the one or more light sources, each light receiver arranged to receive light from its respective light source transmitted through a corresponding chamber,
**characterised in that** the assay device comprises for each chamber, a first surface (210) arranged to reflect light from the corresponding light source to the chamber, and a second surface (212) arranged to reflect light from the chamber to the corresponding light receiver (124).

2. The detection system of claim 1, wherein each diffuser is a first diffuser (126) for its corresponding light source, each light path is a first light path for its corresponding light source, light from each chamber to its respective light receiver forms a second light path, and the detection system comprises a second diffuser (208) corresponding to each of the one or more light sources, each second diffuser arranged in its respective second light path.

3. The detection system of any of claims 1 or 2, comprising an aperture corresponding to each of the one or more light sources, each aperture arranged between the light source and the diffuser corresponding to its respective light source.

4. The detection system of any of claims 1 to 3, wherein each light source and its corresponding light receiver are arranged on the same side of the assay device.

5. The detection system of any of claims 1 to 4, wherein at least one of the one or more chambers of the assay device comprises a surface configured to diffuse light.

6. The detection system of any of claims 1 to 5, comprising an electric motor coupled to the assay device to rotate the assay device.

7. A method of detecting light comprising:
providing a detection system according to claim 1, rotating the assay device (102) comprising a chamber (108) for containing a liquid sample, wherein the assay device comprises a first surface (210) arranged to reflect light from the light source (122) to the chamber, and a second surface (212) arranged to reflect light transmitted through the chamber to the light receiver (124);
emitting light from the light source (122) towards the assay device; diffusing by the diffuser (126) the emitted light before it reaches the chamber; and
receiving by the light receiver (124) the reflected light from the light source that has passed through the chamber of the rotating assay device.

8. The method of claim 7, comprising
diffusing the light that has passed through the chamber before receiving the light.

9. The method of any of claims 7 or 8, wherein emitting light towards the assay device comprises
emitting light to a first side of the assay device, and
receiving light comprises
receiving light from the first side of the assay device.

## Patentansprüche

1. Erkennungssystem (100), umfassend:
eine Untersuchungsvorrichtung (104), die eine oder mehrere Kammern (108) aufweist, die eine flüssige Probe enthalten;
eine Antriebsanordnung (120), welche die Untersuchungsvorrichtung ergreift, um die Untersuchungsvorrichtung rotieren zu lassen;
eine oder mehrere Lichtquellen (122), die jeweils angeordnet sind, um ein Licht in Richtung auf eine entsprechende der einen oder mehreren Kammern abzustrahlen, wobei das abgestrahlte Licht einen Lichtweg zwischen der Lichtquelle und seiner entsprechenden Kammer bildet;
einen Diffusor (126), der jeder der einen oder mehreren Lichtquellen entspricht, wobei jeder Diffusor in einem entsprechenden Lichtweg angeordnet ist; und
einen Lichtempfänger (124), der jeder der einen oder mehreren Lichtquellen entspricht, wobei jeder Lichtempfänger angeordnet ist, um ein Licht von seiner entsprechenden Lichtquelle zu empfangen, das durch eine entsprechende Kammer geleitet wird,
**dadurch gekennzeichnet, dass** die Untersuchungsvorrichtung für jede Kammer umfasst: eine erste Oberfläche (210), die angeordnet ist, um das Licht von der entsprechenden Lichtquelle zu der Kammer zu reflektieren, und eine zweite Oberfläche (212), die angeordnet ist, um das Licht von der Kammer zu dem entsprechenden Lichtempfänger (124) zu reflektieren.

2. Erkennungssystem nach Anspruch 1, wobei jeder Diffusor ein erster Diffusor (126) für seine entsprechende Lichtquelle ist, wobei jeder Lichtweg ein erster Lichtweg für seine entsprechende Lichtquelle ist, wobei das Licht von jeder Kammer zu seinem entsprechenden Lichtempfänger einen zweiten Lichtweg bildet, und wobei das Erkennungssystem einen zweiten Diffusor (208) umfasst, der jeder der einen oder mehreren Lichtquellen entspricht, wobei jeder zweite Diffusor in seinem entsprechenden Lichtweg angeordnet ist.

3. Erkennungssystem nach einem der Ansprüche 1 oder 2, das eine Blende umfasst, die jeder der einen oder mehreren Lichtquellen entspricht, wobei jede Blende zwischen der Lichtquelle und dem Diffusor angeordnet ist, der seiner entsprechenden Lichtquelle entspricht.

4. Erkennungssystem nach einem der Ansprüche 1 bis 3, wobei jede Lichtquelle und ihr entsprechender Lichtempfänger auf der gleichen Seite der Untersuchungsvorrichtung angeordnet sind.

5. Erkennungssystem nach einem der Ansprüche 1 bis 4, wobei mindestens eine der einen oder mehreren Kammern der Untersuchungsvorrichtung eine Oberfläche umfasst, die konfiguriert ist, um ein Licht zu streuen.

6. Erkennungssystem nach einem der Ansprüche 1 bis 5, das einen Elektromotor umfasst, der mit der Untersuchungsvorrichtung gekoppelt ist, um die Untersuchungsvorrichtung rotieren zu lassen.

7. Verfahren zum Erkennen von Licht, umfassend:
Bereitstellen eines Erkennungssystems nach Anspruch 1;
Rotieren der Untersuchungsvorrichtung (102), die eine Kammer (108) umfasst, die eine flüssige Probe enthalten, wobei die Untersuchungsvorrichtung umfasst: eine erste Oberfläche (210), die angeordnet ist, um das Licht von der Lichtquelle (122) zu der Kammer zu reflektieren, und eine zweite Oberfläche (212), die angeordnet ist, um das Licht, das durch die Kammer geleitet wird, zu dem Lichtempfänger (124) zu reflektieren;
Abstrahlen von Licht von der Lichtquelle (122) in Richtung auf die Untersuchungsvorrichtung;
Streuen, durch den Diffusor (126), des abgestrahlten Lichts, bevor es die Kammer erreicht; und
Empfangen, in dem Lichtempfänger (124), des reflektierten Lichts von der Lichtquelle, das durch die Kammer der rotierenden Untersuchungsvorrichtung geleitet wurde.

8. Verfahren nach Anspruch 7, umfassend:
Streuen des Lichts, das durch die Kammer geleitet wurde, bevor das Licht empfangen wird.

9. Verfahren nach einem der Ansprüche 7 oder 8, wobei das Abstrahlen von Licht in Richtung auf die Untersuchungsvorrichtung umfasst:
Abstrahlen von Licht auf eine erste Seite der Untersuchungsvorrichtung, und
wobei das Empfangen von Licht umfasst:
Empfangen von Licht von der ersten Seite der Untersuchungsvorrichtung.

## Revendications

1. Système de détection (100) comprenant :
un dispositif d'analyse (104) comportant une ou plusieurs chambres (108) destinées à contenir un échantillon liquide ;
un agencement d'entraînement (120) mettant en prise le dispositif d'analyse pour faire tourner le dispositif d'analyse ;
une ou plusieurs sources de lumière (122) agencées chacune pour émettre de la lumière vers une chambre correspondante de la ou des chambres, la lumière émise formant un trajet lumineux entre la source de lumière et sa chambre respective ;
un diffuseur (126) correspondant à chacune de la ou des sources de lumière, chaque diffuseur étant agencé dans un trajet lumineux respectif ; et
un récepteur de lumière (124) correspondant à chacune de la ou des sources de lumière, chaque récepteur de lumière étant agencé pour recevoir la lumière provenant de sa source de lumière respective transmise à travers une chambre correspondante.
**caractérisé en ce que** le dispositif d'analyse comprend pour chaque chambre,
une première surface (210) agencée pour réfléchir la lumière de la source de lumière correspondante vers la chambre, et une deuxième surface (212) agencée pour réfléchir la lumière de la chambre vers le récepteur de lumière correspondant (124).

2. Système de détection selon la revendication 1, chaque diffuseur étant un premier diffuseur (126) pour sa source de lumière correspondante, chaque trajet lumineux étant un premier trajet lumineux pour sa source de lumière correspondante, la lumière de chaque chambre vers son récepteur de lumière respectif formant un deuxième trajet lumineux, et le système de détection comprenant un deuxième diffuseur (208) correspondant à chacune de la ou des sources de lumière, chaque deuxième diffuseur étant agencé dans son deuxième trajet lumineux respectif.

3. Système de détection selon l'une quelconque des revendications 1 ou 2, comprenant une ouverture correspondant à chacune de la ou des sources de lumière, chaque ouverture étant agencée entre la source de lumière et le diffuseur correspondant à sa source de lumière respective.

4. Système de détection selon l'une quelconque des revendications 1 à 3, chaque source de lumière et son récepteur de lumière correspondant étant agencés du même côté du dispositif d'analyse.

5. Système de détection selon l'une quelconque des revendications 1 à 4, au moins une de la ou des chambres du dispositif d'analyse comprenant une surface configurée pour diffuser la lumière.

6. Système de détection selon l'une quelconque des revendications 1 à 5, comprenant un moteur électrique couplé au dispositif d'analyse pour faire tourner le dispositif d'analyse.

7. Procédé de détection de la lumière comprenant :
la fourniture d'un système de détection selon la revendication 1, la rotation du dispositif d'analyse (102) comprenant une chambre (108) pour contenir un échantillon liquide, le dispositif d'analyse comprenant une première surface (210) agencée pour réfléchir la lumière provenant de la source de lumière (122) vers la chambre, et une deuxième surface (212) agencée pour réfléchir la lumière transmise à travers la chambre vers le récepteur de lumière (124) ;
l'émission de lumière à partir de la source de lumière (122) en direction du dispositif d'analyse ;
la diffusion par le diffuseur (126) de la lumière émise avant qu'elle n'atteigne la chambre ; et
la réception par le récepteur de lumière (124) de la lumière réfléchie provenant de la source de lumière qui a traversé la chambre du dispositif d'analyse rotatif.

8. Procédé selon la revendication 7, comprenant :
la diffusion de la lumière qui a traversé la chambre avant la réception de la lumière.

9. Procédé selon l'une quelconque des revendications 7 ou 8, l'émission de lumière vers le dispositif d'analyse comprenant
l'émission de lumière vers un premier côté du dispositif d'analyse, et
la réception de lumière comprenant :
la réception de la lumière provenant du premier côté du dispositif d'analyse.
